## Europäisches Patentamt
## European Patent Office
## Office européen des brevets

(19)

(11) Publication number: **0 005 358**
**B1**

(12)

# EUROPEAN PATENT SPECIFICATION

(45) Date of publication of patent specification: **28.10.81**

(51) Int. Cl.³: **B 60 J 1/20, B 62 D 35/00**

(21) Application number: **79300733.7**

(22) Date of filing: **30.04.79**

(54) **Air deflector for motor vehicles.**

(30) Priority: **01.05.78 US 901914**

(43) Date of publication of application:
**14.11.79 Bulletin 79/23**

(45) Publication of the grant of the European patent:
**28.10.81 Bulletin 81/43**

(84) Designated Contracting States:
**BE DE FR GB IT NL SE**

(56) References cited:
**DE - A - 2 649 953**
**US - A - 6 931 665**
**US - A - 3 097 882**

(73) Proprietor: **FORD MOTOR COMPANY LIMITED**
**Eagle Way**
**Brentwood Essex CM13 3BW (GB)**
(84) **GB**
(73) Proprietor: **FORD -WERKE AKTIENGESELLSCHAFT**
**Ottoplatz 2 Postfach 210369**
**D-5000 Köln 21 (DE)**
(84) **DE**
(73) Proprietor: **Ford Motor Company**
**Dearborn Wayne Michigan (US)**
(84) **BE IT NL SE**
(73) Proprietor: **FORD FRANCE SOCIETE ANONYME**
**344 Avenue Napoleon Bonaparte B.P. 307**
**F-92506 Rueil Malmaison Cedex (FR)**
(84) **FR**

(72) Inventor: **Chabot, James Vincent**
**4260 Sandy Lane**
**Birmingham Michigan 48010 (US)**
Inventor: **Holka, Thomas C**
**28062 Wildwood Trail**
**Farmington Hills Michigan 48018 (US)**
Inventor: **McNally, Thomas E**
**24583 Crocker**
**Mt.Clemens Michigan 48043 (US)**

(74) Representative: **Drakeford, Robert William et al,**
**Ford Motor Company Limited 15/448, Research &**
**Engineering Centre Laindon**
**Basildon Essex SS15 6EE (GB)**

# Air deflector for motor vehicles

This invention relates to air deflectors.

In U.S Patent No. 3,560,044 the statement is made "It is common in connection with automobiles of the station wagon type to utilize wind deflectors adjacent the rear window in an effort to prevent the accumulation of dirt and other foreign matter on the rear window". This accumulation results from the partial vacuum formed immediately behind the vehicle as the latter is driven forwardly (see U.S Patent No. 3,097,882).

The solution to the partial vacuum problem as disclosed in both the above cited patents (which are representative of the prior art) comprises the placement of a fixed deflector element adjacent the vehicle rear window. The fixed deflector is mounted so that it projects into the airstream downwardly across the rear window. The downward flow of air breaks the partial vacuum and prevents the adhesion of dirt and other particulate matter to the window surface. German Utility Model No. DE—U 6 931 665 discloses a similar deflector in which the position of the airfoil can be pivotally adjusted into a desired orientation and then secured. Such deflectors have the disadvantage in that, as the vehicle speed increases, the fixed deflector acts as an air brake. This results in a degradation in fuel economy.

The present invention provides an air deflector assembly for a motor vehicle comprising an airfoil, support means adapted to be secured to the vehicle adjacent the upper edge of the rear window of the vehicle, and pivot means coupling the airfoil to the support means for swinging movement about a pivot axis between a first position in which the airfoil deflects air flowing thereover downwardly, and a second position in which the drag exerted by the airfoil on the air flowing thereover is reduced, the airfoil being movable from the first position into the second position by the pressure exerted thereon by the air flowing over the airfoil.

In use, the air deflector assembly is mounted on suitable support means on a vehicle roof adjacent the upper edge of a rear or tailgate window. Preferably, the airfoil is coupled to the support means by suitable pivot means that permit free swinging movement about a pivot axis defined by the pivot means. The airfoil is swingable from a maximum pitch position relative to the vehicle roof in which it creates an air brake effect on the vehicle to a minimum pitch position at which it lies substantially parallel to the roof, thereby nullifying the air brake effect. The airfoil, of its own weight maintains the maximum pitch position in which it acts as an air deflector directing the airstream downwardly over the rear window of the vehicle until the vehicle speed attains a velocity at which the pressure of the airstream causes sufficient lift on the airfoil to swing the latter upwardly toward the minimum pitch position relative to the vehicle roof.

A preferred embodiment of the invention will now be described, by way of example only, with reference to the accompanying drawings, in which:—

Fig. 1 is a perspective view of the upper rear end of a station wagon with an air deflector shown in its maximum pitch position relative to the vehicle roof; in accordance with the invention;

Fig. 2 is a view in part similar to Fig. 1, with the air speed sensitive variable pitch air deflector shown in its minimum pitch position relative to the vehicle roof;

Fig. 3 is an enlarged fragmentary elevational view looking in the direction of the arrow 3 in Fig. 1;

Fig. 4 is a view in part sectional taken substantially on the line 4—4 of Fig. 3, showing one embodiment of a detent means for maintaining the air deflector at its maximum pitch position relative to the vehicle roof;

Fig. 5 is a view in part similar to Fig. 4, illustrating a second embodiment of a detent means for maintaining the air deflector in maximum pitch position;

Fig. 6 is a view in part similar to Fig. 4, illustrating a third embodiment of a detent means for maintaining the air deflector either in maximum pitch position or in minimum pitch position relative to the roof; and

Fig. 7 is a section view on the line 7—7 of Fig. 6.

Referring now to the drawings, an air speed sensitive variable pitch air deflector, generally designated 10, is shown mounted on the roof 11 of a station wagon type vehicle having a rear door or tailgate 12 provided with a window 13. The air deflector 10 is shown mounted substantially in the same manner as the air deflector disclosed in U.S. Reissue Patent No. RE. 26,538. The latter patent discloses an air deflector comprising an airfoil fixedly secured at each end to a mounting bracket that has an upper end portion telescopically connected to the rear end of a side rail of a roof mounted luggage rack, the airfoil being positioned directly above and slightly rearwardly of the rear window of the vehicle.

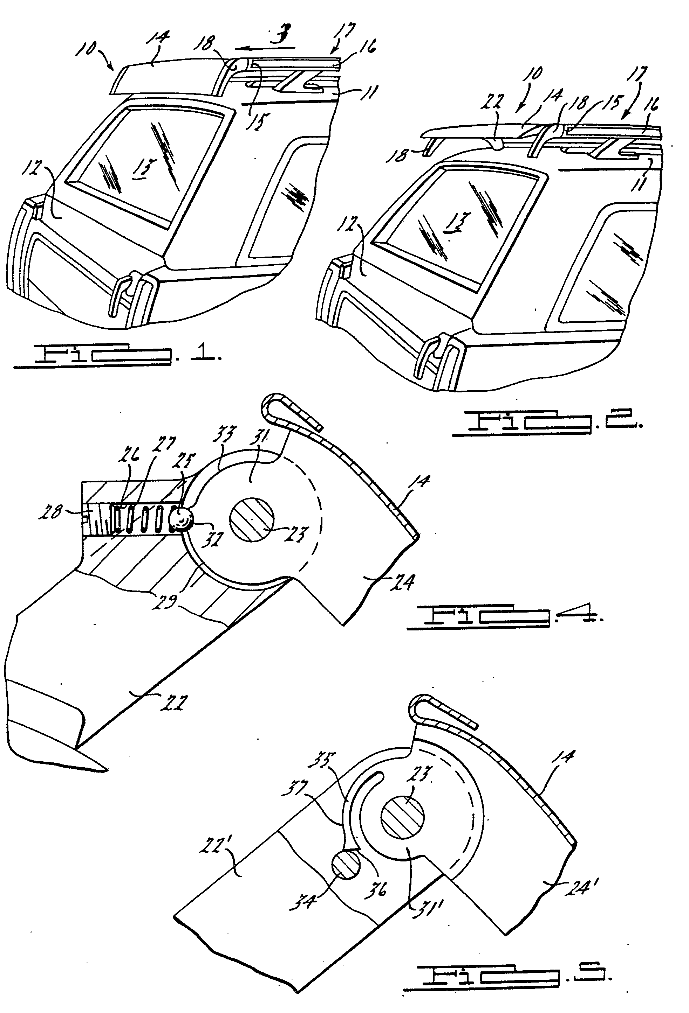

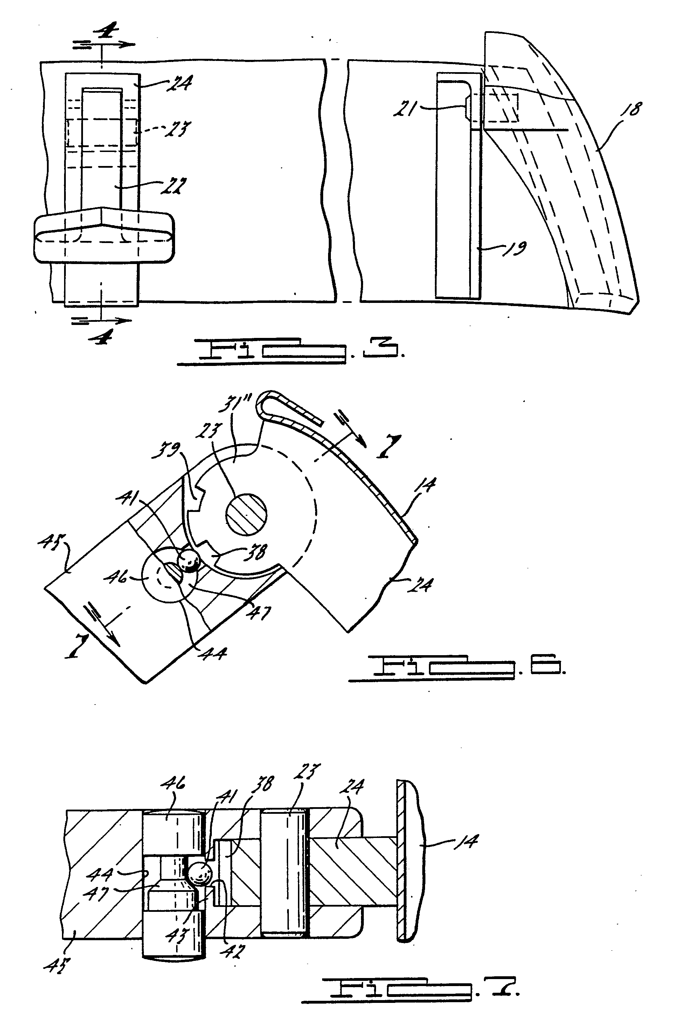

The air deflector 10 comprises an airfoil 14 that also is adapted to be mounted on the rear ends 15 of side rails 16 of a roof mounted luggage rack 17, the airfoil 14 being positioned directly above and slightly rearwardly of the rear window 13 of the vehicle. The airfoil 14 is supported on brackets 19 that have upper end portions (not visible) telescopically engaged with the ends 15 of the side rails 16. As best seen in Fig. 3, the airfoil 14 is reinforced on its underside at each end with a right angle reinforcing member 19 to which is anchored a laterally projecting pivot pin 21. The pivot pin 21 extends into the support bracket 18 and couples the airfoil 14 to the brackets 18 for free swinging movement of the airfoil about a pivot axis extending longitudinally of the airfoil, the pivot axis being defined by the pivot pins 21.

The pivot pins 21 are located adjacent the top of the airfoil 14 so that the latter, under its own weight, maintains a substantially vertical or maximum pitch relationship to the plane of the vehicle roof. The brackets 18 and the airfoil 14 are contoured to provide a substantially flush appearance from the rear (see Fig. 1). Suitable stops (not shown) may be provided to limit the Fig. 1 or the at rest position of the airfoil 14.

The airfoil 14 is capable of swinging from a first or maximum pitch position of Fig. 1 to a second substantially horizontal or zero angle of attack position, which may also be defined as the minimum pitch position, as shown in Fig. 2. This is for the purpose of overcoming one disadvantage of an air deflector that is fixed relative to the vehicle roof. A fixed deflector, maintained at a maximum pitch position in which it is most effective to deflect an airstream downwardly over the rear window, also becomes an effective air brake resisting forward movement of the vehicle as the vehicle speed is increased. The airfoil 14, for example, may be designed and weighted so that it maintains its Fig. 1 or maximum pitch position at vehicle speeds from zero to 30 miles per hour so that it is effective to perform the airstream deflecting-window cleaning function. At speeds below 30 miles per hour, the aerodynamic drag or air brake effect is not great enough to affect the miles-per-gallon efficiency of the vehicle to any great degree. As the vehicle speed approaches 30 miles per hour, the airstream flowing over the vehicle roof begins to exert a lift force on the airfoil sufficient to cause the latter to swing upwardly in a clockwise direction, as viewed in Figs. 1 and 2 of the drawings.

At 50 miles per hour, the airfoil achieves a substantially horizontal or minimum pitch attitude. Although the effectiveness of the airfoil as an airstream deflector for deflecting the airstream in window cleaning direction is nullified, the aerodynamic drag or air brake effect is also substantially nullified. Every ounce of fuel that is conserved is of extreme importance, since, in the United States of America, vehicle manufacturers are required to be increasingly stricter regarding corporate average fuel economy standards with each passing year.

With reference to Fig. 2, a centrally positioned stanchion 22 appears visible beneath the uplifted airfoil 14. This stanchion 22 may be provided to prevent deflection of the airfoil in a direction transversely of the airfoil pivot axis. Under extreme conditions, such deflection could result in permanent warping or bending of the airfoil. This typically occurs by someone leaning against the air deflector while placing articles in the luggage rack or while removing articles from the luggage rack.

The stanchion 22 carries a pivot pin 23 axially aligned with the pivot pins 21 and journalled in a rib 24 extending transversely of the pivot axis of the airfoil integral with the other side of the latter. It will be apparent that similar stanchions may be used to support the ends of the airfoil on the vehicle roof in the absence of a luggage rack 17 on which the air deflector assembly may be mounted.

Inasmuch as some vehicle owners may prefer that the air deflector assembly embodying the present invention be provided with a manual override capability, this may be provided as shown in Figs. 4, 5 and 6—7.

In Fig. 4, the manual override comprises a detent in the form of a ball 25 mounted in an aperture 26 in the stanchion 22. The aperture 26 is radially aligned with the pivot axis of the pivot pin 23. The ball 25 is spring-loaded by a compression spring 27 held in the aperture 26 by a set screw 28. The ball 25 is adapted to bear against the circular end surface 29 of an annular extension 31 of the rib 24. In maximum pitch position of the airfoil 14, the ball 25 is seated in a locking recess 32 in the circular end surface 29 where it is held against displacement by the force exerted on the airfoil by an airstream. Forceable rotation in counter-clockwise direction, as viewed in Fig. 4, of the airfoil 14, results in dislodgement of the detent ball 25 from the recess 32. The ball 25 is then free to roll against the slightly depressed circular surface 33 of the circular end surface 29 as the airfoil moves between the Fig. 1 and Fig. 2 positions. Should the vehicle operator decide again to lock the airfoil in its maximum pitch position, manual pressure exerted on the airfoil in a clockwise direction will be required to seat the ball 25 in the locking recess 32.

Fig. 5, illustrates an alternative construction for a manual override which comprises a detent in the form of a pin 34 extending through the stanchion 22', the axis of the pin 34 paralleling the axis of the pivot 23. In this embodiment, the rib 24' of the airfoil 14 is formed of a plastic material. The rib 24' has an annular extension 31' which has a resilient arcuate appendage 35 that terminates in a flat end 36. In the at rest or maximum pitch position of the airfoil 14, the flat end 36 rests against the surface of the pin 34. Upon sufficient manual force being exerted in a counter-clockwise direction on the airfoil, the resilient appendage 35 will yield toward the pivot pin 23 axis whereby the pin 34 will ride over the arcuate surface 37 of the appendage permitting the airfoil to function as a variable pitch air deflector as the vehicle speed is increased to the critical velocity.

A further alternative construction for a manual override is illustrated in Figs. 6—7. In this embodiment, the manual override not only permits the airfoil 14 to be locked in a maximum pitch position as seen in Fig. 1, but also permits the airfoil 14 to be locked in the minimum pitch position of Fig. 2. The annular extension 31" of the rib 24 is provided in its circular periphery with two spaced locking notches 38 and 39. Either notch 38—39 is adapted to receive a detent in the form of a ball 41. The ball 41 is positioned to be cammed through an aperture 42 in the wall 43 of a cylindrical bore 44 in the stanchion 45. Slidable in the bore 44 is a push-button 46 having a conical cam surface 47.

As shown in Figs. 6 and 7, the push-button 46 is positioned so that the ball 41 is not in engagement with either notch 38 or 39. If the vehicle operator decides that he would prefer to have the airfoil 41 locked in its maximum pitch position, as shown in Fig. 6, it is only necessary for him to push the push-button 46 in a direction to cause the cam surface 47 to drive the ball 41 through the aperture 42 into engagement with the notch 38. The airfoil 14 then would be held against free swinging movement in a counter-clockwise direction, as viewed in Fig. 6. Similarly, if the vehicle operator decides he would like to have the airfoil 14 maintained in its minimum attitude position, he would first be required to align the notch 38 with the ball 41 by raising the airfoil 14 to a zero angle of attack or a minimum pitch position and then, by manipulation of the push-button 46, drive the ball 41 through the aperture 42 into engagement with the notch 39. Thus, with the manual override of this embodiment, the airfoil 14 may be left in a freely swingable condition, or it may be locked in either its raised or down position.

It will be understood that the invention is not to be limited to the exact construction shown in the drawings, but that various changes and modifications may be made therto.

## Claims

1. An air deflector assembly for a motor vehicle comprising an airfoil, support means adapted to be secured to the vehicle adjacent the upper edge of the rear window of the vehicle and pivot means coupling the airfoil to the support means for swinging movement about a pivot axis between a first position in which the airfoil deflects air flowing thereover downwardly, and a second position in which the drag exerted by the airfoil on the air flowing thereover is reduced, the airfoil being movable from the first position into the second position by the pressure exerted thereon by the air flowing over the airfoil.

2. An air deflector according to Claim 1, in which the support means and the airfoil have releasable detent means for locking the airfoil at least in the first position.

3. An air deflector assembly according to Claim 1 or Claim 2, wherein the support means includes a support member supporting the airfoil at each end thereof and at least one stanchion positioned intermediate the end support members to resist deflection of the airfoil in a direction transversely of the pivot axis.

4. An air deflector assembly according to Claim 3, in which a detent means is mounted at least on the one stanchion, the detent means being manually selectively engageable with a detent means engageable portion of the airfoil to lock the same in its first position.

5. A motor vehicle having the air deflector assembly according to any one of Claims 1 to 4 mounted on its roof adjacent the upper edge of its rear window.

## Patentansprüche

1. Luftleitblechaufbau für Kraftfahrzeuge, gekennzeichnet durch ein Flügelprofil, Stützen zuer Befestigung am Fahrzeug neben de Oberkante des Fahrzeugrückfensters und Schwenkvorrichtungen, die das Flügelprofil mit den Stützen verbinden, zwecks einer Schwenkbewegung um eine Schwenkachse zwischen einer ersten Stellung, in welcher das Flügelprofil darüberströmende Luft nach unten ablenkt und einer zweiten Stellung, in welcher der von dem Flügelprofil der darüberströmenden Luft entgegengesetzte Strömungswiderstand verringert ist, wobei das Flügelprofil durch den darauf von der darüberströmenden Luft ausgeübten Druck von der ersten in die zweite Stellung bewegbar ist.

2. Luftleitblech nach Anspruch 1, dadurch gekennzeichnet, dass die Stützen und das Flügelprofil lösbare Rastvorrichtungen zum Arretieren des Flügelprofils zumindest in der ersten Stellung aufweisen.

3. Luftleitblechaufbau nach Anspruch 1 oder 2, dadurch gekennzeichnet, dass die Stützen ein das Flügelprofil an seinen beiden Enden tragendes Stützglied und mindestens eine zwischen den Endstützgliedern angeordnete Runge aufweisen, um einer Ablenkung des Flügelprofils in der Richtung quer zur Schwenkachse entgegenzuwirken.

4. Luftleitblechaufbau nach Anspruch 3, dadurch gekennzeichnet, dass mindestens auf der einen Runge eine Rastvorrichtung angebracht ist, die wahlweise von Hand mit einem Rasteingriffteil des Flügelprofils in Eingriff bringbar ist, um dieses in seiner ersten Stellung zu arretieren.

5. Kraftfahrzeug, dadurch gekennzeichnet, dass es mit einem Luftleitblechaufbau nach einem der Ansprüche 1 bis 4 versehen ist, der auf seinem Dach neben der Oberkante seines Rückfensters angebracht ist.

## Revendications

1. Dispositif déflecteur d'air pour un véhicule à moteur, caractérisé en ce qu'il comprend un aileron, des moyens de support pouvant être fixés au véhicule près du bord supérieur de sa lunette arrière et des moyens de pivotement reliant l'aileron aux moyens de support pour lui permettre de pivoter autour d'un axe de pivotement entre une première position dans laquelle il fait dévier l'air qui s'écoule sur sa surface vers le bas et une deuxième position dans laquelle la résistance qu'il offre à l'air qui s'écoule sur sa surface est réduite, l'aileron pouvant passer de sa première position à sa seconde position sous l'effet de la pression exercée par l'air qui s'écoule sur ses surfaces.

2. Dispositif déflecteur d'air suivant la revendication 1, caractérisé en ce que les moyens de support et l'aileron comportent un dispositif à déclic libérable servant à bloquer l'aileron au moins dans sa première position.

3. Dispositif déflecteur d'air suivant la revendication 1 ou 2, caractérisé en ce que les moyens de support comprennent un organe de support supportant l'aileron à chaque extrémité et au moins un support placé entre les organes de support d'extrémité de manière à résister à une flexion de l'aileron dans un sens transversal à l'axe de pivotement.

4. Dispositif déflecteur d'air suivant la revendication 3, caractérisé en ce qu'un dispositif à déclic est monté au moins sur le dit support et peut être engagé sélectivement à la main avec un moyen de contrepartie de l'aileron pour bloquer cet aileron dans sa première position.

5. Véhicule à moteur comportant un dispositif déflecteur d'air suivant l'une quelconque des revendications 1 à 4 monté sur son toit près du bord supérieur de sa lunette ou vitre arrière.

FIG. 1.

FIG. 2.

FIG. 4.

FIG. 5.

1

FIG. 3.

FIG. 6.

FIG. 7.